# EUROPÄISCHE PATENTSCHRIFT

(11) **EP 2 521 855 B1**
(45) Veröffentlichungstag und Bekanntmachung des Hinweises auf die Patenterteilung: **25.06.2014**
(21) Anmeldenummer: 11706143.2
(22) Anmeldetag: 05.01.2011
(51) Int. Cl.: F03B 7/00, F03B 17/06

(54) **WASSERRAD ZUR ENERGIEERZEUGUNG**
WATER WHEEL FOR GENERATING POWER
ROUE HYDRAULIQUE POUR GÉNÉRER DE L'ÉNERGIE

(30) Priorität: 08.01.2010 DE 102010004157
(43) Veröffentlichungstag der Anmeldung: 14.11.2012
(73) Patentinhaber: Drews, Hartmuth, 25421 Pinneberg (DE)
(72) Erfinder: Drews, Hartmuth, 25421 Pinneberg (DE)
(74) Vertreter: Hansmann, Dierk
(86) Internationale Anmeldenummer: PCT/DE2011/000010
(87) Internationale Veröffentlichungsnummer: WO 2011/082705

(56) Entgegenhaltungen:
- DE-C- 102 791
- FR-A2- 2 320 430
- GB-A- 2 190 144

## Beschreibung

Die Erfindung bezieht sich auf ein Wasserrad zur Energieerzeugung durch zugeordnete Generatoren mit ringförmig angeordneten und quer verlaufende Wasserschaufeln, die durch strömend oder freifallend zugeführtem Wasser beaufschlagbar und die Wasserschaufeln zwischen gebildeten Radkränzen als Außenbegrenzungen angeordnet sind sowie jeweils über Speichen mit einem Achszapfen zur Lagerung verbunden sind, wobei die einzelnen Wasserschaufeln aus baugleichen biegesteif ausgebildeten Elementen gebildet und an ihren Außenseiten den seitlichen Radkränzen des Wasserrades zugeordnet.

Wasserräder mit ringförmig angeordneten Wasserschaufeln sind in vielfältigen Ausbildungen bekannt. Hierbei hat sich in der Praxis gezeigt, dass eine leichte Bauweise und ein modulares System mit hohem Vorfertigungsgrad eine wesentliche Bedeutung besitzt.

Bei den bekannten Wasserrädern hat sich gezeigt, dass der Wirkungsgrad durch starr angeordnete Wasserschaufeln stark herabgesetzt wird. Auch bestehen Sicherheitsbedenken, wenn eine relativ geschlossene Fläche durch die Wasserschaufeln gebildet wird, da hierdurch bei auftretenden Störungen eine Staufläche gebildet wird. Zusätzlich ist die windangriffsfläche relativ groß, so dass bei entsprechenden Windverhältnissen eine Beeinträchtigung auftritt.

Es ist bereits nach der DE 102 791 C ein Wasserrad bekannt, wobei quer verlaufende Wasserschaufeln ringförmig angeordnet und gehalten sind. Hierbei sind die Wasserschaufeln aus einem feststehenden Teil und einem schwenkbaren Teil gebildet, wobei sich in der Arbeitsphase der verschwenkbare Teil gegen den feststehenden Teil anlegt und beim Austritt aus dem Wasser sich annähernd senkrecht zur Wasseroberfläche einstellt. Hierbei ist eine Leichtbauweise nicht gewährleistet, um auch einen leichten modularen Aufbau zu ermöglichen.

Ferner ist eine Anordnung verschwenkbaren Wasserschaufeln aus der GB 21 90 144 A bekannt geworden.Die als zweiarmige Hebel ausgebildeten Wasserschaufeln legen sich in der Arbeitsphase an ein zum Grundkörper des Wasserrades gehörendes Gegenlager an, so dass eine Bauweise aus sebsttragenden Leichtbaumodulen hier nicht möglich ist.

Nach der FR 2320 430 A ist weiterhin eine Anordnung als Wasserrad mit Vertikalachse bekannt geworden, welches ein Gegenlager für die Wasserschaufeln aus mehreren Streben aufweist.Die Wasserschaufeln sind hier sternförmig senkrecht zur durchgehenden vertikal positionierten Welle angeordnet, was einer modularen Leichtbauweise entgegensteht.

Die Aufgabe der Erfindung ist es, ein gattungsgemäßes Wasserrad in leichter Bauweise mit selbsttätig verschwenkbaren Schaufeln zu schaffen, das ein modulares System mit hohem Vorfertigungsgrad ermöglicht und eine mangelnde Windanfälligkeit ohne Bildung von Lufteinschlüssen aufweist sowie eine energetisch optimierte Anordnung von Wasserschaufeln mit großer Tauchtiefe gewährleistet.

Die Lösung dieser Aufgabe erfolgt erfindungsgemäß dadurch, dass die Wasserschaufeln über ein Gitterwerk angeordnet und das Gitterwerk als quer verlaufende prismenartige Anordnung aus mehreren verbundenen Streben als Querträger gebildet ist, die an Knotenpunkten durch Längsstäbe verbunden sind und mindestens eine Strebe der Querträger mit dem Radkranz verbunden ist, wobei ein über die Querträger angeordneter Längsstab zur drehbaren Halterung einer schwenkbar aufgenommenen Wasserschaufel über Aufnahmen ausgebildet ist und ein Längsstab als Gegenlager für die Wasserschaufel in einer Arbeitsposition zugeordnet ist sowie andererseits zur Begrenzung einer Schwenkbewegung der benachbarten Wasserschaufel in der Position im Strömungsschatten dient.

Hierdurch wird eine modulare Leichtbauweise auf einfache Weise ermöglicht, wobei die schwenkbar aufgehängten und abgestützten Wasserschaufeln auch bei großer Tauchtiefe optimiert in Strömungsschatten senkrecht aus dem Wasser austauchen und dadurch auf einfache Weise den Wirkungsgrad erhöhen.

Weiterhin ist bei gleicher Tauchtiefe der Wasserschaufeln die Baugröße des Wasserraddurchmessers deutlich kleiner als die von Wasserrädern mit starr angeordneter Beschaufelung und führt somit zur Materialeinsparung, so dass sich ein günstiges Masse-Leistungs-Verhältnis ergibt.

Beim Einströmen von Triebwasser in das Wasserrad wird vorteilhaft ein Entweichen der Luft durch das Gitterwerk in das Radinnere ermöglicht und eine geordnete Beaufschlagung der Wasserschaufeln mit Triebwasser durchgeführt, ohne dass Luftvolumina eingeschlossen werden. Ferner kann auch überschüssiges Wasser auf diese Weise automatisch zur Entlastung der Gesamtkonstruktion abgeleitet werden. Hierdurch erfolgt eine günstige Auswirkung auf die statische Bemessung aller Einzelbauteile des Wasserrades.

Eine vorteilhafte Ausbildung des Gitterwerkes besteht darin, dass die Streben für die Querträger als Dreiecksanordnung ausgebildet sind und die zugeordnete Wasserschaufel im Endbereich über einen oberen verbundenen Längsstab gelagert ist.

Eine alternative Ausbildung wird dadurch gebildet, dass die Streben für die Querträger als Vierecksanordnung angeordnet sind und die zugeordnete Wasserschaufel im mittleren Flächenbereich gelagert ist, wobei ein zusätzlicher Längsstab über Halterarme außerhalb des Querträgers als Gegenlager gebildet ist.

Um die Drehbewegung der Wasserschaufeln in den einzelnen Positionen als Klappschaufel einzustellen und eine gesteuerte Bewegung zu erhalten, wird vorgeschlagen, dass der innenliegende Bereich der Wasserschaufel Verlängerungen zur Aufnahme von Justiergewichten aufweist.

Alternativ wird vorgeschlagen, dass die Wasserschaufel mit einer Lagerung im mittleren Flächenbereich im innenliegenden Bereich der Wasserschaufel im Abstand zur Schwenkachse Justiergewichte aufweist.

Eine weitere alternative Beeinflussung einer Drehbewegung der Wasserschaufel besteht darin, dass die Lagerbereiche der Wasserschaufel auf dem Längsstab durch Aufnahmen mit justierbaren Einstellelementen für eine Hemmung von Schwenkbewegungen der Wasserschaufel aufweisen.

Zur Bildung eines wirtschaftlichen modularen Systems wird vorgeschlagen, dass der Radkranz mit seinen Speichen aus zusammensetzbaren Sektorelementen zur Aufnahme eines Achszapfens gebildet ist.

Ferner wird vorgeschlagen, dass zur Bildung eines Generators der Radkranz als Rotor in Form von Permanentmagneten trägt und im Bereich einer Tragstruktur zur Aufnahme eines Achszapfens ein korrespondierender Teilring als Stator durch elektrische Spulen angeordnet ist.

In den Zeichnungen sind Ausführungsbeispiele der Erfindung schematisch dargestellt. Es zeigen:

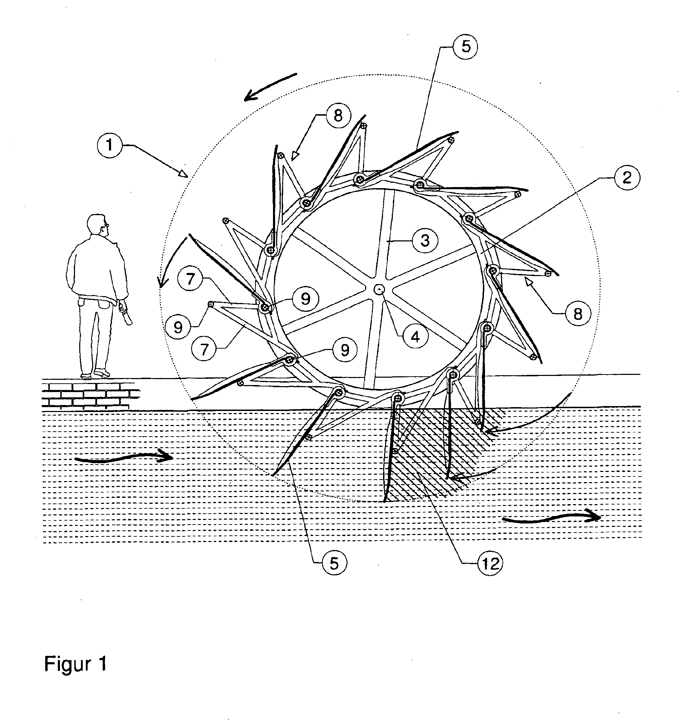

- Fig. 1: eine Prinzipdarstellung eines Wasserrades mit verschwenkbaren Schaufeln in Seitenansicht;
- Fig. 2: eine perspektivische Darstellung einer Ausbildung des Wasserrades ohne Wasserschaufeln mit einer Anlenkung für die Wasserschaufeln über ein Gitterwerk als Prismenausbildung mit Querträger in Dreiecksanordnung;
- Fig. 3: eine vergrößerte Darstellung der Anordnung zur Aufnahme der Wasserschaufeln mit Querträger in Dreiecksanordnung gemäß Fig. 2;
- Fig. 4: eine Darstellung wie Fig. 3 mit verbundenen Wasserschaufeln;
- Fig. 5: eine Ausführungsform der angeordneten Wasserschaufeln mit einer Verlängerung zur Aufnahme von Justiergewichten;

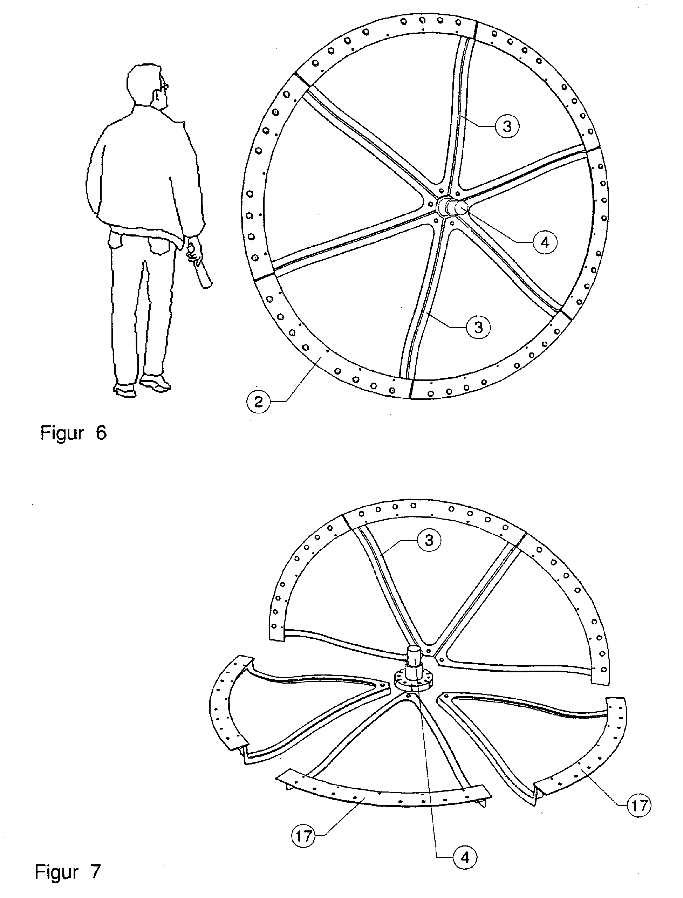

- Fig. 6: eine Seitenansicht auf einen Radkranz als Außenbegrenzung mit Speichen und Aufnahme eines Achszapfens aus einzelnen Segmenten,
- Fig. 7: eine Explosivdarstellung gemäß Fig. 6;
- Fig. 8: eine weitere Ausführungsform des Wasserrades in Prinzipdarstellung mit einer Aufnahme der Prismenausbildung mit Querträger in Vierecksanordnung;
- Fig. 9: eine perspektivische Darstellung gemäß Fig. 8 und
- Fig. 10: eine Darstellung einer Vierecksanordnung als Querträger mit aufgenommener Wasserschaufel;

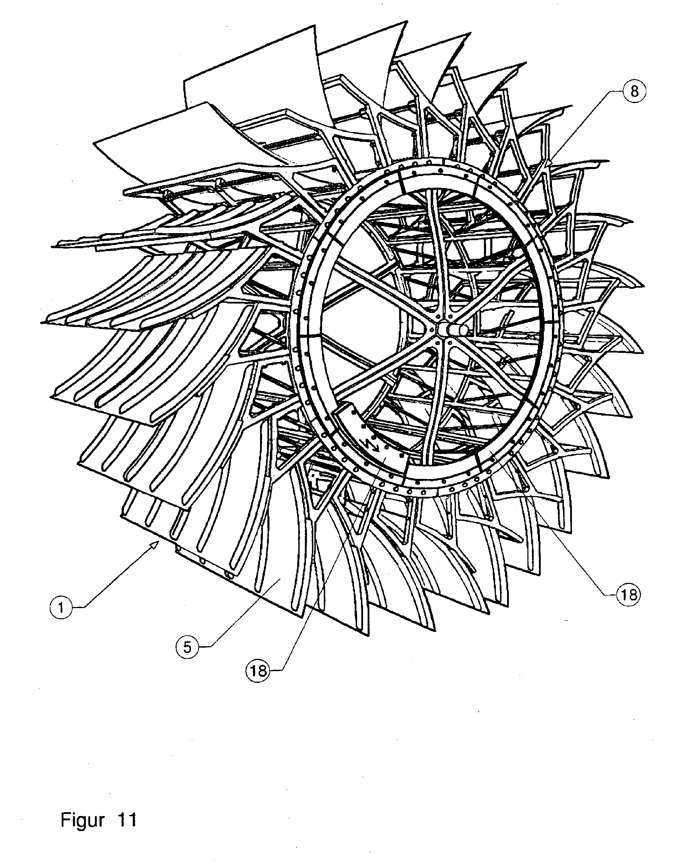

- Fig. 11: eine Darstellung wie Fig. 9 mit einem integrierten Generator.

Ein dargestelltes Wasserrad 1 besteht aus außenseitigen Radkränzen 2, die über Speichen 3 mit einem Achszapfen 4 gebildet und durch die Achszapfen 4 über ein nicht näher dargestelltes Fundament bzw. eine Haltekonsole als Tragstruktur drehbar angeordnet sind.

Zwischen den Radkränzen 2 sind einzelne Wasserschaufeln 5 aus beweglichen biegesteif ausgebildeten Elementen angeordnet, die über ein Gitterwerk 6 aufgenommen werden. Das Gitterwerk 6 ist an seinen Außenbegrenzungen mit den Radkränzen 2 fest verbunden und bildet somit eine leichte Haltekonstruktion für die Wasserschaufeln 5 zur Ausbildung des Wasserrades 1.

Das Gitterwerk 6 wird durch eine prismenförmige Anordnung gebildet, wobei mehrere Streben 7 über Knotenpunkte 9 verbunden sind und Querträger 8 bilden.

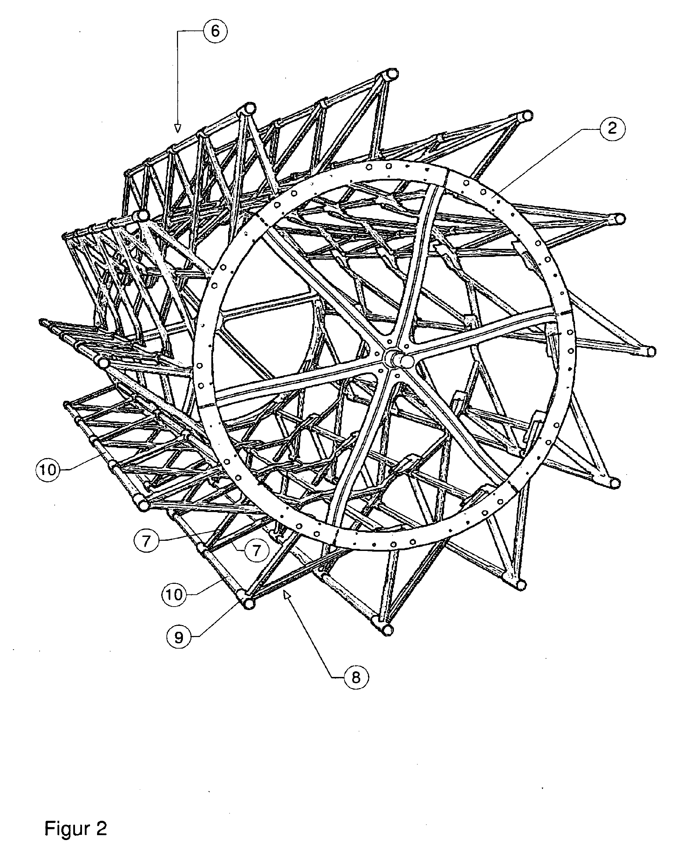

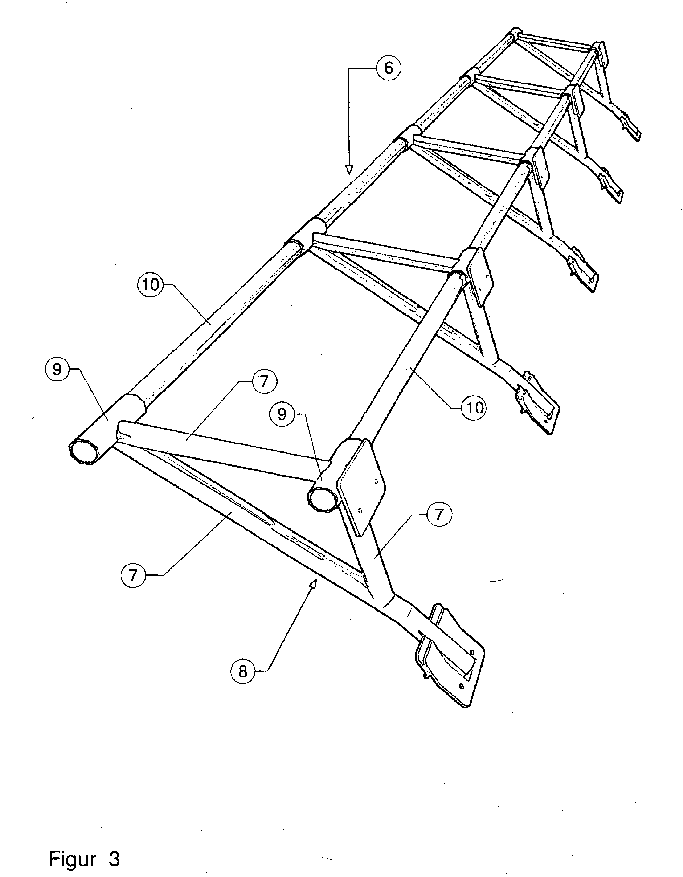

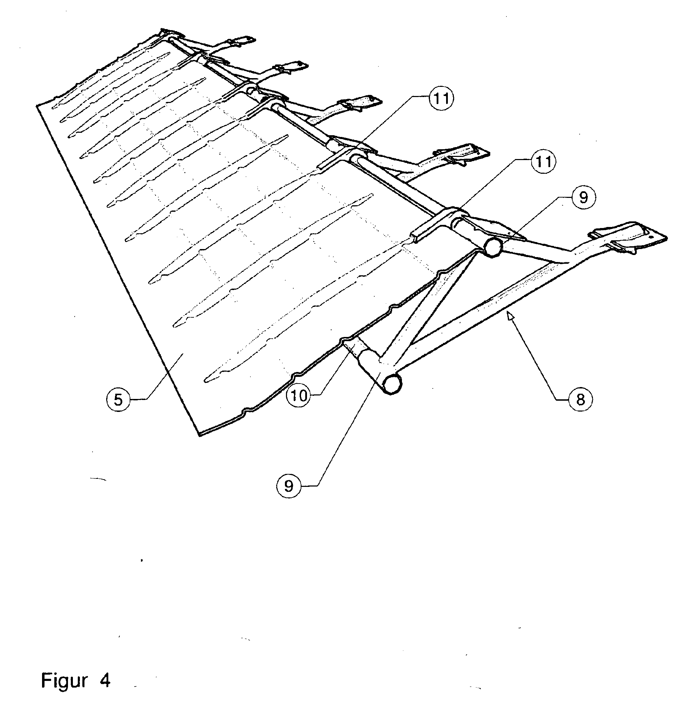

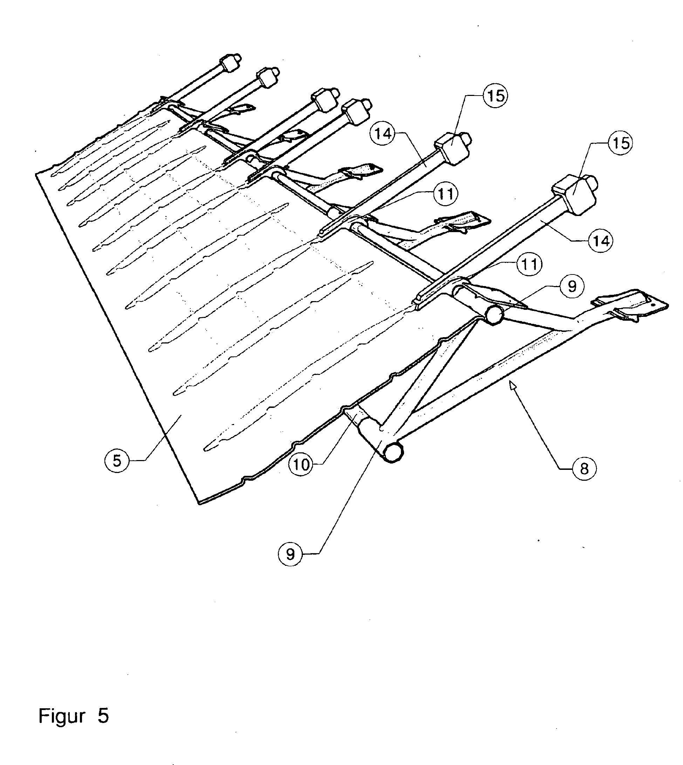

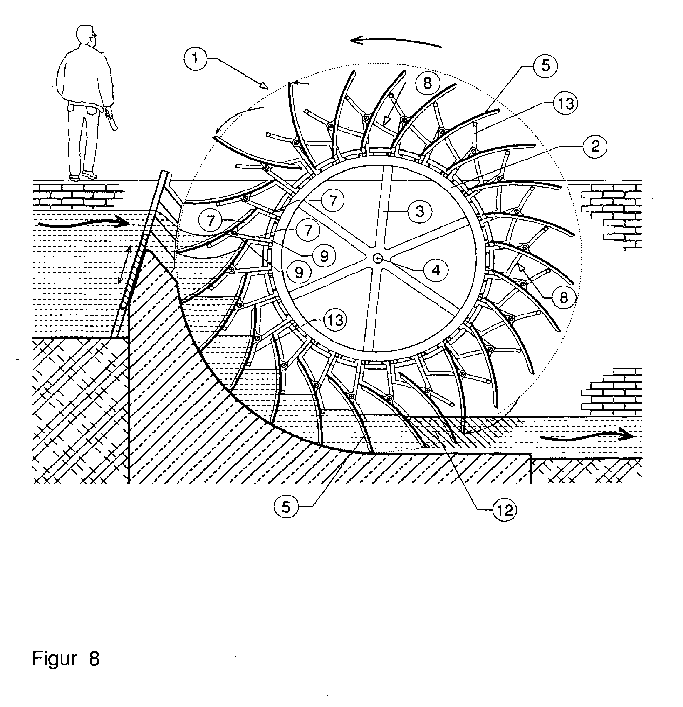

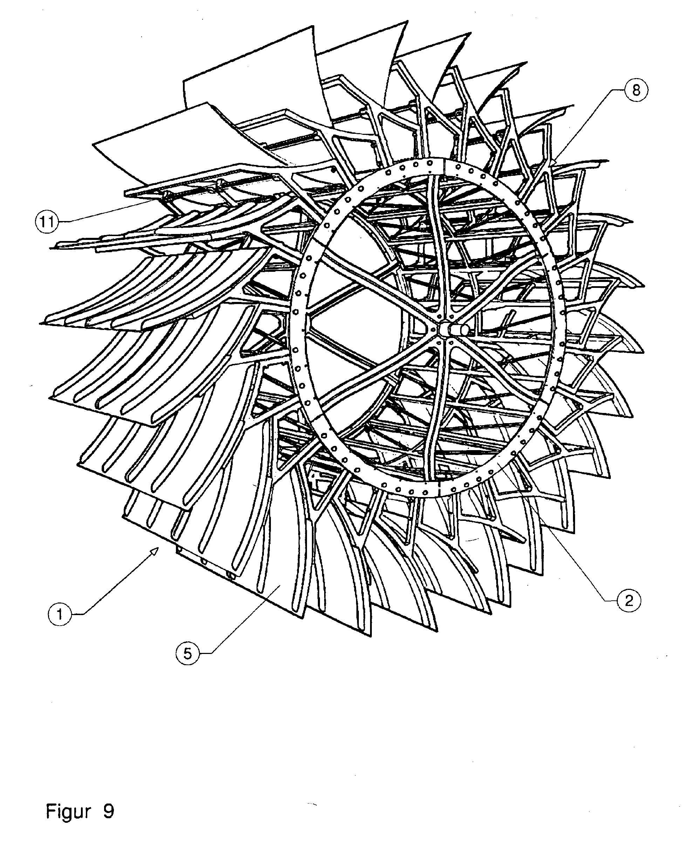

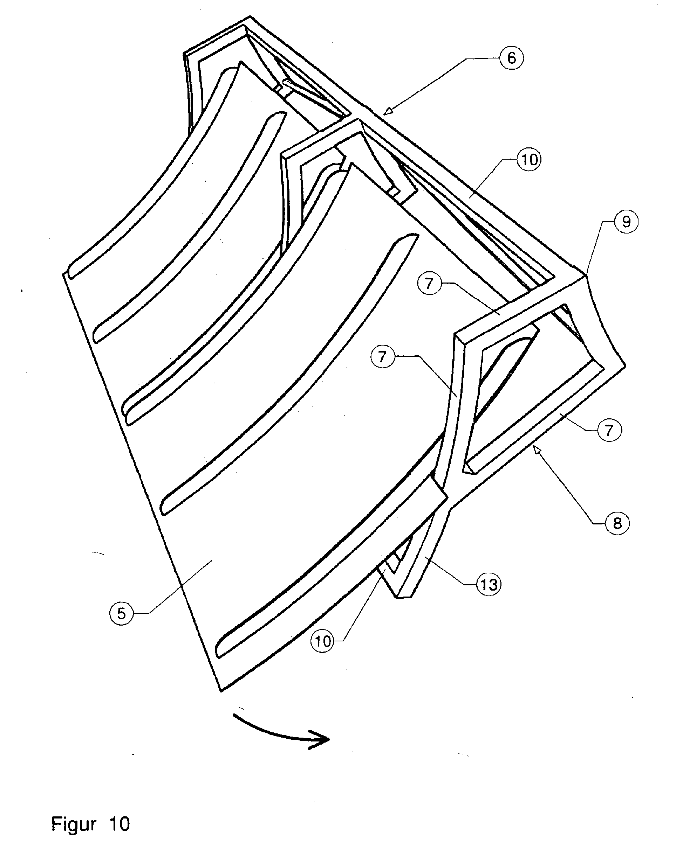

Die Querträger 8 sind in der Darstellung gemäss Fig. 2 bis 5 als Dreiecksanordnung ausgebildet und in Fig. 8 bis 10 als Vierecksanordnung. Die gebildeten Querträger 8 sind in den gebildeten Knotenpunkten 9 durch Längsstäbe 10 verbunden, wobei eine Strebe 7 bzw. ein auf die Längsstäbe 10 im Endbereich aufgesetztes Halteelement mit dem Radkranz 2 fest verbunden ist und somit eine stabile Haltekonstruktion bildet.

Jede Wasserschaufel 5 wird über einen durch die Querträger 8 gehaltenen Längsstab 10 selbsttätig verschwenkbar durch Aufnahmen 11 gehalten. Hierbei dient ein Längsstab 10 der Ausbildung als Gegenlager für die verschwenkbare Wasserschaufel 5 in seiner Arbeitsposition.

Andererseits wird der Längsstab 10 als Gegenlager gleichzeitig zur Begrenzung einer Schwenkbewegung der benachbarten Wasserschaufel 5 eingesetzt, die sich im Strömungsschatten 12 der Drehbewegung des Wasserrades 1 befindet.

Durch diese Anordnung von schwenkbaren Wasserschaufeln 5 ist es somit möglich, dass die im Strömungsschatten 12 angeordneten Wasserschaufeln 5 den Widerstand bei einer Drehbewegung herabsetzen und quasi senkrecht während der Drehbewegung herausgezogen werden.

Bei einer Anordnung gemäss Fig. 8 bis 10 mit einer Vierecksanordnung des Querträgers 8 ist die Wasserschaufel 5 im mittleren Flächenbereich über Aufnahmen 11 schwenkbar gelagert, wobei über einen zusätzlichen Längsstab über Haltearme 13 ausserhalb der Querträger 8 als Gegenlager in der Arbeitsposition und in der Position im Strömungsschatten 12 gebildet ist.

Die Wasserschaufeln 5 sind durch die Aufnahmen 11 in Form von Buchsen auf dem Längsstab schwenkbar angeordnet. Um die Schwenkbewegung gesteuert ablaufen zu lassen, ist vorgesehen, dass die Aufnahmen 11 als Buchsen justierbare Einstellelemente aufweisen. Hierdurch wird ein hartes Aufschlagen auf begrenzende Längsstäbe vermieden.

Eine alternative Ausbildung zur Beeinflussung einer Schwenkbewegung wird dadurch geschaffen, dass im innenliegenden Bereich der Wasserschaufel 5 Verlängerungen 14 zur Aufnahme von einstellbaren Justiergewichten 15 aufweist. Bei im mittleren Flächenelement der Wasserschaufel 5 angeordneten Lagerung ist hierbei im innenliegenden Bereich im Abstand zur Schwenkachse eine Anordnung von Justiergewichten 15 vorgesehen, die auch als Wulst an der Wasserschaufel 5 ausgebildet sein können.

Um einen modularen Aufbau zu verbessern, sind der Radkranz 2 mit seinen Speichen 3 aus Sektorelementen 17 zur Bildung einzelner Module aufgebaut.

Zur Bildung eines integrierten Generators ist- der Radkranz 2 mit Permanentmagneten 18 als Rotor ausgerüstet und im Bereich der Tragstruktur zur Aufnahme des Achszapfens 4 ein korrespondierender Teilring 19 als Stator durch elektrische Spulen angeordnet ist und prinzipiell zugeordnet ist.

## Patentansprüche

1. Wasserrad zur Energieerzeugung durch zugeordnete Generatoren mit ringförmig angeordneten und quer verlaufende Wasserschaufeln, die durch strömend oder freifallend zugeführtem Wasser beaufschlagbar sind und die Wasserschaufeln zwischen als Außenbegrenzungen gebildeten Radkränzen angeordnet sind, wobei die Radkränze jeweils über Speichen mit einem Achszapfen zur Lagerung verbunden sind, wobei die einzelnen Wasserschaufeln aus baugleichen biegesteif ausgebildeten Elementen gebildet und an ihren Außenseiten den seitlichen Radkränzen des Wasserrades zugeordnet sind, **dadurch gekennzeichnet, daß** die Wasserschaufeln (5) über ein Gitterwerk (6) angeordnet und das Gitterwerk (6) als quer verlaufende prismenartige Anordnung aus mehreren verbundenen Streben (7) als Querträger (8) gebildet ist, die an Knotenpunkten (9) durch Längsstäbe (10) verbunden sind und mindestens eine Strebe (7) der Querträger (8) mit dem Radkranz (2) verbunden ist, wobei ein über die Querträger (8) angeordneter Längsstab (10) zur drehbaren Halterung einer schwenkbar aufgenommenen Wasserschaufel (5) über Aufnahmen ausgebildet ist und ein Längsstab (10) als Gegenlager für die Wasserschaufel (5) in einer Arbeitsposition zugeordnet ist sowie andererseits zur Begrenzung einer Schwenkbewegung der benachbarten Wasserschaufel (2) in der Position im Strömungsschatten (18) dient.

2. Wasserrad nach Anspruch 1, **dadurch gekennzeichnet, daß** die Streben (7) für die Querträger (8) als Dreiecksanordnung ausgebildet sind und die zugeordnete Wasserschaufel (5) im Endbereich über einen oberen verbundenen Längsstab gelagert ist.

3. Wasserrad nach Anspruch 1, **dadurch gekennzeichnet, daß** die Streben für die Querträger (8) als Vierecksanordnung angeordnet sind und die zugeordnete Wasserschaufel (5) im mittleren Flächenbereich gelagert ist, wobei ein zusätzlicher Längsstab über Halterarme außerhalb des Querträgers als Gegenlager gebildet ist.

4. Wasserrad nach einem der Ansprüche 1 bis 3, **dadurch gekennzeichnet, daß** der innenliegende Bereich der Wasserschaufel (5) Verlängerungen (14) zur Aufnahme von Justiergewichten (15) aufweist.

5. Wasserrad nach einem der Ansprüche 1 bis 3, **dadurch gekennzeichnet, daß** die Wasserschaufel (5) mit einer Lagerung im mittleren Flächenbereich im innenliegenden Bereich der Wasserschaufel (5) im Abstand zur Schwenkachse Justiergewichte (16) aufweist.

6. Wasserrad nach einem der Ansprüche 1 bis 3, **dadurch gekennzeichnet, daß** die Lagerbereiche der Wasserschaufel (5) auf dem Längsstab Aufnahmen (11) mit justierbaren Einstellelementen für eine Hemmung von Schwenkbewegungen der Wasserschaufel (5) aufweisen.

7. Wasserrad nach einem der Ansprüche 1 bis 6, **dadurch gekennzeichnet, daß** der Radkranz (2) mit seinen Speichen (3) aus zusammensetzbaren Sektorelementen (17) zur Aufnahme eines Achszapfens (4) gebildet ist.

8. Wasserrad nach einem der Ansprüche 1 bis 7, **dadurch gekennzeichnet, daß** zur Bildung eines Generators der Radkranz (2) einen Rotor in Form von Permanentmagneten (18) trägt und im Bereich einer Tragstruktur zur Aufnahme eines Achszapfens (4) ein korrespondierender Teilring (19) als Stator durch elektrische Spulen angeordnet ist.

## Claims

1. Water wheel for generating power by means of associated generators with transversely extending water paddles which are arranged in the form of a ring and which can be acted upon by water which is fed in in a flowing or free-falling manner, and the water paddles are arranged between wheel rims which are formed as outer delimitations, wherein said wheel rims are each connected via spokes to an axle journal for mounting purposes and wherein the individual water paddles are formed from identically constructed elements of rigid design and are associated, on their outer sides, with the lateral wheel rims of the water wheel, **characterised in that** the water paddles (5) are arranged across a latticework (6) and said latticework (6) is formed as a transversely-extending, prism-like arrangement consisting of a number of connected struts (7) as cross-members (8) which are connected at nodal points (9) by longitudinal bars (10), and at least one strut (7) of the cross-members (8) is connected to the wheel rim (2), a longitudinal bar (10) arranged across the cross-members (8) being designed for rotatably holding a pivotably received water paddle (5) via receptacles, and a longitudinal bar (10) being associated as a counter-bearing for the water paddle (5) in a working position and also serving, on the other hand, for delimiting a pivoting movement of the adjacent water paddle (5) in the position in the turbulent region (18) of the flow.

2. Water wheel according to Claim 1, **characterised in that** the struts (7) for the cross-members (8) are designed as a triangular arrangement and the associated water paddle (5) is mounted, in the end region, across an upper, connected longitudinal bar.

3. Water wheel according to Claim 1, **characterised in that** the struts for the cross-members (8) are arranged as a quadrangular arrangement and the associated water paddle (5) is mounted in the central region of the surface, an additional longitudinal bar being formed, across holding arms, outside the cross-member as a counter-bearing.

4. Water wheel according to one of Claims 1 to 3, **characterised in that** the internally located region of the water paddle (5) has extensions (14) for receiving adjusting weights (15).

5. Water wheel according to one of Claims 1 to 3, **characterised in that** the water paddle (5) having a mounting in the central region of the surface, has adjusting weights (16) in the internally located region of the water paddle (5) at a distance from the axis of pivoting.

6. Water wheel according to one of Claims 1 to 3, **characterised in that** the bearing regions of the water paddle (5) on the longitudinal bar have receptacles (11) with adjustable setting elements for impeding pivoting movements of said water paddle (5).

7. Water wheel according to one of Claims 1 to 6, **characterised in that** the wheel rim (2) with its spokes (3) is formed from sector elements (17) for receiving an axle journal (4), which sector elements can be assembled.

8. Water wheel according to one of Claims 1 to 7, **characterised in that**, for the purpose of forming a generator, the wheel rim (2) carries a rotor in the form of permanent magnets (18) and, in the region of a carrying structure for receiving an axle journal (4), a corresponding partial ring (19) is arranged as a stator by means of electrical coils.

## Revendications

1. Roue hydraulique destinée à générer de l'énergie au moyen de générateurs associés, avec des aubes qui, disposées en forme d'anneau et s'étendant transversalement, sont soumises à l'action d'eau s'écoulant ou tombant en chute libre, et les aubes étant disposées entre des couronnes de roue disposées aux bords extérieurs, chacune des couronnes de roue étant reliée par des rayons à un tourillon d'axe de support, sachant que les aubes sont respectivement formées par des éléments de même construction résistante à la flexion et sont associées aux couronnes de roue latérales de la roue hydraulique avec leurs faces extérieures,
**caractérisée en ce que** les aubes (5) sont disposées sur une charpente en treillis (6) et que la charpente en treillis (6) est réalisée sous la forme d'un agencement transversal, en forme de prisme formé de plusieurs entretoises (7) reliées en tant que supports transversaux (8), qui sont reliés, à des noeuds de jonction (9), par des barres longitudinales (10), et qu*au moins une entretoise (7) des supports transversaux (8) est reliée à la couronne de roue (2), sachant qu'une barre longitudinale (10), disposée sur les supports transversaux (8), est conçue pour la fixation à rotation d'une aube pivotante (5) par l'intermédiaire d'organes de réception et qu'une barre longitudinale (10) est associée, en tant que support dans une position de travail et, d'autre part, sert à limiter un mouvement de pivotement de l'aube (5) voisine dans la position à écoulement nul (18).

2. Roue hydraulique selon la revendication 1, **caractérisée en ce que** les entretoises (7) pour les supports transversaux (8) sont réalisées en tant qu'agencement en triangle et que l'aube (5) associée est montée dans la région d'extrémité par l'intermédiaire d'une barre longitudinale montée à la partie supérieure.

3. Roue hydraulique selon la revendication 1, **caractérisée en ce que** les entretoises pour les supports transversaux (8) sont disposées en agencement quadrangulaire et que l'aube (5) associée est montée dans la région plane, centrale, sachant qu'une barre longitudinale supplémentaire est réalisée en tant qu'appui des bras de retenue en dehors du support transversal.

4. Roue hydraulique selon l'une des revendications 1 à 3,
**caractérisée en ce que** la partie de l'aube (5) située à l'intérieur est dotée de prolongements (14) destinés à recevoir des poids d'ajustage (15).

5. Roue hydraulique selon l'une des revendications 1 à 3,
**caractérisée en ce que** l'aube (5) présente des poids d'ajustement (16) à distance de l'axe de pivotement, avec un support dans la région plane centrale de l'aube (5) située à l'intérieur.

6. Roue hydraulique selon l'une des revendications 1 à 3,
**caractérisée en ce que** les sections de montage des aubes (5) sur la barre longitudinale sont dotées d'organes de réception (11) avec des éléments de réglage ajustables destinés à inhiber les mouvements de pivotement des aubes (5).

7. Roue hydraulique selon l'une des revendications 1 à 6,
**caractérisée en ce que** la couronne de roue (2) est formée, avec ses rayons (3), à partir d'éléments sectoriels (17) assemblables pour la réception d'un tourillon d'axe (4).

8. Roue hydraulique selon l'une des revendications 1 à 7,
**caractérisée en ce que**, pour la réalisation d'un générateur, la couronne de roue (2) porte un rotor qui est formé par des aimants permanents (18) et que, dans la région d'une structure de support, pour la réception d'un tourillon d'axe (4), un segment de bague (19) est disposé en tant que stator avec des bobines électriques.
